# NEUE EUROPÄISCHE PATENTSCHRIFT

(11) **EP 1 896 259 B2**
(45) Veröffentlichungstag und Bekanntmachung des Hinweises auf die Entscheidung über den Einspruch: **29.10.2014**
(45) Hinweis auf die Patenterteilung: 27.07.2011
(21) Anmeldenummer: 06755165.5
(22) Anmeldetag: 11.05.2006
(51) Int. Cl.: B32B 37/12, B05B 3/10

(54) **VERFAHREN ZUR HERSTELLUNG VON VERBUNDELEMENTEN AUF DER BASIS VON MINERALISCHEN ODER ORGANISCHEN THERMISCHEN DÄMMMATERIALIEN UNTER VERWENDUNG EINES KLEBERS**
METHOD FOR THE PRODUCTION OF COMPOSITE ELEMENTS BASED ON MINERAL OR ORGANIC THERMAL INSULATION MATERIALS WITH THE AID OF AN ADHESIVE
PROCEDE DE PRODUCTION D'ELEMENTS COMPOSITES A BASE DE MATERIAUX ISOLANTS THERMIQUES MINERAUX OU ORGANIQUES, AU MOYEN D'UN ADHESIF

(30) Priorität: 13.05.2005 DE 102005023109
(43) Veröffentlichungstag der Anmeldung: 12.03.2008
(73) Patentinhaber: BASF SE, 67056 Ludwigshafen (DE)
(72) Erfinder: GLEINIG, Erhard, 01968 Senftenberg (DE); CALGUA, Erwin, 67480 Edenkoben (DE); THATER, Michael, 49424 Goldenstedt (DE)
(86) Internationale Anmeldenummer: PCT/EP2006/062254
(87) Internationale Veröffentlichungsnummer: WO 2006/120234

(56) Entgegenhaltungen:
- EP-A2- 1 445 085
- EP-A2- 1 593 439
- WO-A1-90/05592
- WO-A1-99/67086
- WO-A1-2006/029786
- FR-A- 2 837 743
- FR-A1- 2 837 743
- GB-A- 2 164 872
- US-A- 3 297 474
- US-A- 5 296 303
- D.RANDALL & S.LEE: 'The polyurethanes book', 2002, JOHN WILEY&SONS,LTD, UK, ISBN 0470850418 Seiten 1 - 8

## Beschreibung

### Beschreibung

Die Erfindung betrifft ein Verfahren zur Herstellung von Verbundelementen aus mindestens einer Deckschicht und thermischen Dämmmaterialplatten, beispielsweise Mineralfaserplatten oder Platten aus expandiertem Polystyrol (EPS) unter Verwendung eines Klebers.

Die Herstellung von Verbundelementen aus insbesondere metallischen Deckschichten und einem Kern aus einem thermischen Dämmmaterial ist bekannt. Insbesondere die Herstellung von Platten, die einen Kern aus Mineralwolle enthalten, häufig auch als Miwo-Sandwichelemente bezeichnet, auf kontinuierlich arbeitenden Doppelbandanlagen wird gegenwärtig in immer größerem Umfang praktiziert. Der wesentliche Vorteil solcher Elemente besteht neben der Brauchbarkeit als Konstruktionselemente in ihrem großen Widerstand gegenüber Flammeinwirkung. Miwo-Sandwichelemente werden insbesondere zur Gestaltung von Fassaden und Dächern verschiedenster Gebäude eingesetzt, bei denen es auf einen sehr hohen Brandschutz ankommt. Als Deckschichten werden dabei neben beschichteten Stahlblechen auch Edelstahl-, Kupfer- oder Aluminiumbleche eingesetzt.

Für die Verklebung des Kernmaterials, insbesondere der Mineralwolleplatten untereinander oder mit den metallischen Deckschichten haben sich ein- oder zweikomponentige Kleber auf Isocyanatbasis bewährt. Die Verklebung mit den metallischen Deckschichten kann dabei auf verschiedene Art und Weise erfolgen. So kann man zum Beispiel eine aktivierte Polyol-Komponente und eine Isocyanatkomponente separat voneinander in Form von Tropfen oder Flüssigkeitsspuren auf das Blech auftragen und mit einem oszillierenden Wischerblatt vermischen. Nachteil dieses einfachen Verfahrens ist die ungenügende Mischqualität und der daraus resultierende hohe Materialverbrauch bei nur mäßigen Klebeeigenschaften. Das Reaktionsgemisch kann auch maschinell mit Hoch- oder Niederdrucktechnik hergestellt und mittels oszillierender Gießharken oder als Spritzstrahl auf das Blech bzw. die Mineralwolle gegeben werden. Die Verwendung einer Gießharke setzt einen relativ hohen Klebereinsatz voraus, da das Gießrohr bei geringen Durchsatzmengen sehr leicht zuwächst und häufig ausgetauscht werden muss. Vielerorts hat sich deshalb der Spritzstrahl durchgesetzt. Aber auch diese Auftragsart hat Nachteile. Die Geschwindigkeit des kontinuierlich arbeitenden Doppelbandes wird durch die maximal mögliche Oszillationsgeschwindigkeit des Mischkopfes begrenzt. Zusätzlich wirkt sich nachteilig aus, dass mit zunehmender Oszillation mehr Kleber im Randbereich und weniger im Mittenbereich der Deckschicht aufgetragen wird. Dies führt zu einer unzureichenden Haftung zwischen Kernmaterial und Metalldeckschicht. Weiterhin birgt diese Verfahrensweise die Gefahr der Bildung von Aerosolen mit sich. Diese sind gesundheitsgefährdend und verschmutzen auch die Absaugungen an den Doppelbandanlagen.

Demzufolge sollte ein Verfahren gefunden werden, welches einen Kleber, insbesondere einen Kleber auf Isocyanatbasis, möglichst gleichmäßig auf Deckschichten und/oder Kernmaterial verteilt, die Produktionsgeschwindigkeit nicht einschränkt, keine Aerosole bildet und trotz geringer Klebermenge eine ausreichende Haftung gewährleistet. Das Verfahren soll kontinuierlich oder diskontinuierlich eingesetzt werden können. Eine diskontinuierliche Arbeitsweise kann zum Beispiel bei Anfahrvorgängen des Doppelbandes und bei diskontinuierlich arbeitenden Pressen in Frage kommen.

Ein möglicher Weg zur Gewährleistung der Haftung bei niedrigem Materialeinsatz ist der Auftrag des Klebers, der vorzugsweise ein optimal vermischtes Polyurethan-Reaktionsgemisch darstellt, als Tropfen auf die Deckschichten oder das Kernmaterial. Die Tropfen lassen sich einfach erzeugen und verteilen, indem man den Kleber kontinuierlich auf eine rotierende Scheibe gibt und das Reaktionsgemisch abschleudert. Kreisrunde Scheiben haben den Nachteil, dass auch sie Materialanhäufungen im Randbereich zu Lasten der Tröpfchendichte im Mittenbereich des Elementes bewirken

Ein dem Spin-Coating sehr ähnliches Verfahren benutzt ebenfalls eine rotierende Vorrichtung. Allerdings wird hier die Substanz durch die Rotation der Scheibe lateral weggeschleudert. Mit dieser Technik lassen sich besonders gut Rohre oder andere Hohlräume von innen beschichten, wie beispielsweise in US 3349568, DE 2808903 und WO 9959730 beschrieben. Eine Weiterentwicklung dieser Technik dient zur Beschichtung von Formteilen und auch Blechen. Allerdings werden bei all diesen Verfahren die zu beschichtenden Deckschichten um die rotierende Scheibe herum geführt und die Substanz wird von der Scheibe immer in lateraler Richtung auf die betreffende Deckschicht aufgeschleudert, wie beispielsweise in DE 2412686 beschrieben. Zum besseren Auftrag wird dabei zum Teil zusätzlich noch ein elektrostatisches Feld angelegt. Bei all diesen Verfahren können jedoch in hohem Maße Aerosole gebildet werden, welche umwelt- und gesundheitsschädlich sind.

Die WO 2006/029786 A1, die ein Dokument gemäß Artikel 54(3) EPÜ ist, beschreibt ein Verfahren zur Herstellung von Verbundelementen auf der Basis von Schaumstoffen auf Isocyanatbasis.

In US-A-3,297,474 wird ein Verfahren zur Herstellung von Sandwich-Elementen mit einem Kern aus Polyurethan beschrieben. Dabei wird das flüssige Schaum-System mittels einer Mischvorrichtung, bei der die flüssige Mischung auf einen rotierenden konischen Körper gebracht und von dort auf die untere Deckschicht verteilt wird, wo sie zum Schaum aushärtet. Es handelt sich bei dem Verfahren um das typische Verfahren zur Herstellung von Polyurethan-Sandwichelementen, das sich nur durch die Ausgestaltung der Auftragsvorrichtung für die flüssigen Ausgangskomponenten des Polyurethans von anderen derartigen Verfahren unterscheidet.

Dokument US-A-5,296,303 beschreibt eine Vorrichtung zum Aufbringen einer Beschichtung auf ein Substrat. Dabei wird ein Beschichtungsmittel von einem rotierenden Körper gegen einen anderen rotierenden Körper, der wie eine umgekerte Schüssel geformt ist, geschleudert und gelangt von dort auf das Substrat.

Aufgabe der vorliegenden Erfindung war es nun, ein geeignetes Auftragsverfahren für einen Kleber auf ein horizontales Blech oder ein plattenartiges Dämmmaterial zu finden, das für die Herstellung von Sandwichelementen geeignet ist, keine Aerosole freisetzt, wartungsarm ist, die Produktionsgeschwindigkeit der Doppelbandanlage nicht einschränkt und eine möglichst gleichmäßige Verteilung des Klebers über die Paneelbreite gewährleistet.

Die Aufgabe konnte überraschenderweise gelöst werden, indem der Kleber über einen in der Waagerechten, vorzugsweise parallel zur Deckschicht oder zum Plattensubstrat, befindlichen flachen rotierenden Körper auf die Deckschicht aufgebracht wird. Dieser Körper kann die Form eines ebenen, vorzugsweise vier- oder fünfzackigen Sterns, eines mit den Spitzen nach oben gebogenen vier- oder fünfzackigen Sterns oder einer ebenen Scheibe mit kaskadenartig ansteigenden Umrandungen haben.

Gegenstand der Erfindung ist somit ein Verfahren zur Herstellung von Verbundelementen aus mindestens einer Deckschicht a) und thermischen Dämmmaterialplatten b), wobei zwischen der Deckschicht a) und den thermischen Dämmmaterialplatten b) ein Kleber c), insbesondere ein Kleber auf Isocyanatbasis, aufgebracht ist, die Deckschicht a) kontinuierlich bewegt und der Kleber c) auf die thermischen Dämmmaterialplatten b) und/oder auf die Deckschicht aufgebracht wird und Deckschicht a) und die thermischen Dämmmaterialplatten b) miteinander verbunden werden, dadurch gekennzeichnet, dass der Auftrag des Klebers c) mittels eines rotierenden flachen Körpers erfolgt, der in der Waagerechten oder in einer geringen Abweichung von der Waagerechten von bis zu 15°, vorzugsweise parallel zu der Deckschicht oder den Dämmmaterialplatten b) angebracht ist und dass die Drehzahl des rotierenden flachen Körpers zwischen 200 und 2000 min⁻¹ beträgt.

Als Deckschicht können Gipskartonplatten, Glasfliese, Aluminiumfolien, Aluminium-Kupfer- oder Stahlbleche, bevorzugt Aluminiumfolien, Aluminium- oder Stahlbleche, besonders bevorzugt Stahlbleche verwendet werden. Die Stahlbleche können beschichtet oder unbeschichtet sein. Vorzugsweise werden sie nicht corona-behandelt.

Dabei befindet sich die Deckschicht oder die Dämmmaterialplatten ab dem Auftrag des Klebers, in einer waagerechten oder leicht geneigten Position.

Dabei können die Verbundelemente nur eine Deckschicht enthalten, mit denen die thermischen Dämmmaterialplatten b) verbunden sind.

Bei den üblichen Sandwich-Elementen wird das thermische Dämmmatefial von einer unteren und einer oberen Deckschicht umschlossen. Für die Herstellung müssen beide Deckschichten mit dem mineralischen oder organischen Dämmmaterial verklebt werden. Zum Verkleben der oberen Deckschicht mit dem thermischen Dämmmaterial kann der Kleber auf obere Deckschicht oder auf das thermische Dämmmaterial aufgetragen werden. Der Auftrag auf die obere Deckschicht erfolgt vorzugsweise ebenfalls mit der efindungsgemäßen Vorrichtung zum Auftrag des Klebers.

Beim erfindungsgemäßen Verfahren zur Herstellung der Verbundelemente werden bei Verwendung von Blechen oder Folien als Deckschichten nacheinander die Deckschichten von Coils abgewickelt, gegebenenfalls profiliert, erwärmt und gegebenenfalls corona-behandelt. Danach wird der Kleber auf die Deckschichten oder die Dämmmaterialplatten gebracht und durch das erwärmte Doppelplattenband gefahren, wo die eigentliche Verklebung erfolgt und der Kleber aushärtet. Mittels einer Säge wird der Endlosstrang auf die gewünschte Elementlänge zugeschnitten.

Günstig ist dabei, wenn die Entfernung zwischen Auftrag des Klebers und Kontaktzeitpunkt zwischen Deckschichten und den Dämmmaterialplatten gering ist. Dadurch ist der Abfall, welcher durch dieses Verfahren zu Beginn und Ende sowie bei unvorhergesehenen Unterbrechungen des Produktionsprozesses entsteht, minimal.

Der Austrag des Klebers für die Verklebung der unteren Deckschicht mit den Dämmmaterialplatten oder der Dämmmaterialplatten mit der oberen Deckschicht erfolgt, wie beschrieben, über einen rotierenden flachen Körper, welcher in der Waagerechten, vorzugsweise parallel über der unteren Deckschicht montiert ist und über einen Antrieb in Rotation versetzt werden kann. Der rotierende Körper kann auch mit einer Abweichung von bis zu 15° von der Waagerechten angebracht werden. Der rotierende Körper kann vorzugsweise die Form eines ebenen, vier- oder fünfzackigen Sterns, der in der Draufsicht abgerundete Spitzen und keine geraden Linien aufweist, oder einer ebenen runden Scheibe mit kaskadenartig nach außen ansteigenden Umrandungen auf der Oberseite und darin befindlichen Austrittsöffnungen, insbesondere Bohrungen, besitzen.

Bild 1 zeigt die Draufsicht eines vierzackigen Sterns, der keine geraden Linien aufweist. Die Zuführung des Klebers erfolgt dabei vorzugsweise durch die Mitte.

Das Abschleudern der Tropfen von der sternförmigen Scheibe erfolgt an der oberen Kante. Der Stern ist flach und vorzugsweise zwischen 0,5 und 20 mm dick. Sein Radius beträgt, je nach der Breite der Verbundelemente, außen 4 bis 30 cm und innen 1 bis 20 cm. Vorzugsweise liegt der Außenradius zwischen 5 und 20 cm und der Innenradius zwischen 2 und 10 cm. Gefertigt wird der Stern aus Materialien, auf denen Polyurethane nicht oder nur geringfügig haften. Vorzugsweise werden Polyolefine, wie Polyethylen, Polypropylen, Teflon, oder mit diesen Polymeren beschichtete metallische Träger verwendet. Die gesamte Außenkante des Sterns ist, wie oben beschrieben, geschwungen ausgeführt, so dass bei Draufsicht keine gerade Linie und kein spitzer oder stumpfer Winkel vorhanden ist. Der Innenradius stellt den nahesten Abstand der Außenkante vom Mittelpunkt der Achse (1), an der der Stern befestigt ist, und der Außenradius den entsprechenden entferntesten Punkt dar. Gegebenenfalls kann die Abschleuderkante mit 2 bis 10 zusätzlichen Einkerbungen versehen werden. Ein solcher Stern ist in Bild 2 dargestellt. Die Abschleuderkante ist die jeweils im Windschatten der Drehrichtung gelegene Längskante eines Sternstrahls.

Bild 3 zeigt die Seitenansicht einer kreisrunden Kaskadescheibe. Dabei befindet sich die Achse (A) im Mittelpunkt der Scheibe. Das Abschleudern der Tropfen von der Kaskadenscheibe erfolgt durch die Bohrungen (B). Die Kaskaden (C) befinden sich auf der Oberseite der Scheibe. Sie sind nach außen hin ansteigend angeordnet. Es wird mit zwei bis zu sieben Kaskaden gearbeitet, wobei vorzugsweise zwei bis vier Kaskaden zum Einsatz kommen. In den Innenwinkeln der einzelnen Kaskaden befinden sich die Bohrungen (B), die schräg nach unten auswärts gerichtet sind. Der Winkel dieser Bohrungen liegt zwischen 10 und 80° von der Waagerechten nach unten, vorzugsweise jedoch zwischen 30 und 60°. Die Anzahl der Bohrungen pro Kaskade und ihr Durchmesser richtet sich nach der auszutragenden Menge mit dem Ziel einer möglichst gleichmäßigen Verteilung über die Breite des zu produzierenden Elementes. Es wird mit 2 bis 8, vorzugsweise mit 4 bis 6 Löchern pro Kaskade gearbeitet. Der Abstand der Kaskaden kann gleichmäßig über den Radius verteilt sein oder auch ungleichmäßig in dem Sinne, dass der Abstand von innen nach außen größer wird.

Die Kaskadenscheibe weist, abhängig von der Baubreite des Verbundelementes, einen Durchmesser zwischen 4 bis 40 cm, bevorzugt 5 bis 30 cm auf. Sie ist in einem Abstand von 1 - 20 cm, bevorzugt 3 -10 cm, von der zu benetzenden Deckschicht a) oder Dämmmaterial b) angebracht.

Das Aufbringen des Klebers von unten an die obere Deckschicht erfolgt kann mittels eines mit den Spitzen nach oben gebogenen vier- oder fünfzackigen Sterns, dessen Außenkonturen so geschwungen ausgeformt sind, dass keine geraden Linien oder spitze bzw. stumpfe Winkel vorhanden sind. Dieser entspricht in seiner Form vorzugsweise dem oben beschriebenen, in Bild 1 dargestellten Stern. Die Zuführung des Klebers erfolgt dabei ebenfalls vorzugsweise durch die Mitte. Während sich der gewölbte Stern dreht, wird der Kleber in die Nähe der Drehachse aufgetragen und durch die Fliehkraft an den Kanten abgeschleudert. Dabei muss die Drehzahl und der Abstand zur oberen Deckschicht so gewählt werden, dass die Tropfen die Deckschicht treffen, bevor sie den Scheitelpunkt ihrer Flugbahn erreicht haben und sich durch Erdanziehung und Verlangsamung ihrer Geschwindigkeit wieder abwärts bewegen.

Der Stern ist in sich wie ein Kugelabschnitt gebogen. Die Höhe des Kugelabschnitts liegt zwischen 1 und 10 cm. Der durch Rotation der Spitzen des Sterns beschriebene äußere Durchmesser beträgt zwischen 8 und 60 cm, vorzugsweise jedoch 10 bis 40 cm. Der innere Durchmesser des Sterns beschreibt bei Rotation einen Kreisdurchmesser von 2 bis 40 cm, vorzugsweise jedoch einen zwischen 4 und 20 cm.

Das Material ist zwischen 0,5 und 20 mm dick. Gefertigt wird der Stern ebenfalls aus den beschriebenen Materialien, auf denen Polyurethane nicht oder nur geringfügig haften. Die gesamte Außenkante des Sterns ist ebenfalls geschwungen ausgeführt, so dass bei Draufsicht keine gerade Linie und kein spitzer oder stumpfer Winkel vorhanden ist. Gegebenenfalls kann die Abschleuderkante ebenfalls mit 2 bis 10 zusätzlichen Einkerbungen versehen werden.

Der Benetzungsradius des Klebers ist über Rotationsgeschwindigkeit und Abstand des rotierenden Körpers so einzustellen, dass die gesamte Baubreite des Sandwichelementes erfasst wird.

Die Drehzahl des rotierenden flachen Körpers liegt vorzugsweise zwischen 200 - 2500 min⁻¹, besonders bevorzugt zwischen 200 - 2000 min⁻¹, und insbesondere zwischen 300 - 1500 min⁻¹.

Die Menge des aufgetragenen Klebers c) liegt zwischen 30 - 300 g/m², bevorzugt 40 - 200 g/m², besonders bevorzugt 50 - 150 g/m² und Seite.

Der Kleber c) wird vor dem Aufbringen auf den rotierenden flachen Körper maschinell vermischt, wobei Hoch- oder Niederdruckmischer, vorzugsweise Niederdruckmischer, verwendet werden können, und über eine geeignete Austragsvorrichtung, beispielsweise ein nachgeschaltetes Rührorgan, auf den rotierenden flachen Körper aufgetragen. Wird der rotierende flache Körper mittels eines Antriebs in Rotation versetzt, erfolgt eine flächige Verteilung des Klebers c) auf die darunter befindliche, kontinuierlich beförderte Deckschicht oder das Dämmmaterial. Dasselbe passiert bei Verwendung des gebogenen Sterns zum Benetzen der oberen Deckschicht. Die Zufuhr des Reaktionsgemisches erfolgt zumeist durch die Drehachse. Zum Vermischen und Auftragen des Klebers auf den rotierenden Körper kann beispielsweise ein Rührorgan aus Kunststoff verwendet werden. Die Austragsmenge des Klebers c) wird so auf die Geschwindigkeit des kontinuierlich arbeitenden Doppelbandes abgestimmt, dass die gewünschte Auftragsmenge pro m² Blech realisiert werden kann. Als erstes wird die untere Deckschicht mit Kleber versehen, dann die Dämmmaterialplatten aufgelegt und anschließend mit einem weiteren rotierenden Auftragsgerät Kleber zum Verkleben der oberen Deckschicht auf die Dämmmaterialplatten gegeben.

Im Gegensatz zum Stand der Technik wird der Kleber c) zwar lateral weggeschleudert, aber aufgrund der niedrigen Rotationsgeschwindigkeit und der konstruktiven Gestaltung des rotierenden Körpers auf die sich in der Waagerechten, vorzugsweise parallel und unterhalb oder auch oberhalb zum rotierenden Körper befindliche Deckschicht verteilt. Überraschend wurde nun gefunden, dass der Auftrag mittels oben beschriebener Technik nicht nur aerosolfrei, sondern auch wesentlich gleichmäßiger über die Breite erfolgen kann.

Als Aerosole werden dabei kolloidale Systeme aus Gasen, wie Luft, mit darin fein verteilten kleinen flüssigen Teilchen von etwa 10⁻⁷ bis 10⁻³ cm Durchmesser bezeichnet.

In der Praxis war es bisher erklärtes Ziel für die Verklebung von Dämmmaterialplatten mit Deckschichten, einen möglichst geschlossenen dünnen Kleberfilm aufzutragen, Überraschenderweise wurde nun gefunden, dass eine punktförmige Verklebung durch tröpfchenförmigen Auftrag eine wesentlich materialökonomischere Lösung bei Beibehaltung einer Haftfestigkeit, die größer ist als die Querzugsfestigkeit des mineralischen oder organischen Dämmmaterials darstellt.

Überraschend wurde weiterhin gefunden, dass das Auftragsbild des Klebers auf die Deckschichten oder die Dämmmaterialplatten durch die Formgebung des sternförmigen Körpers und durch die kaskadenartige Ausformung einer kreisrunden Scheibe mit nach außen gerichteten schrägen Austrittsöffnungen gleichmäßiger als bei Verwendung einer kreisförmigen Scheibe wird.

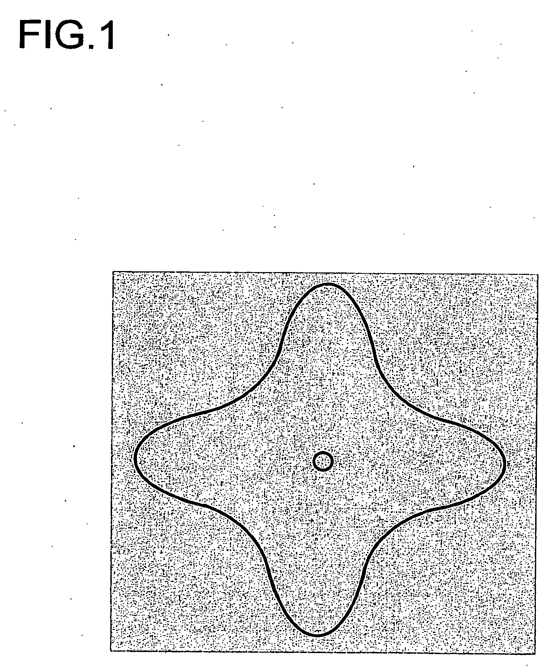

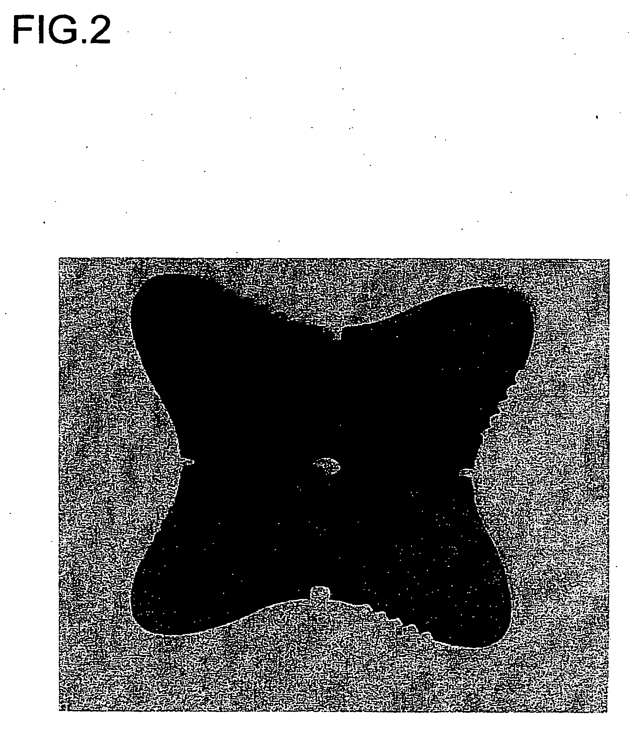

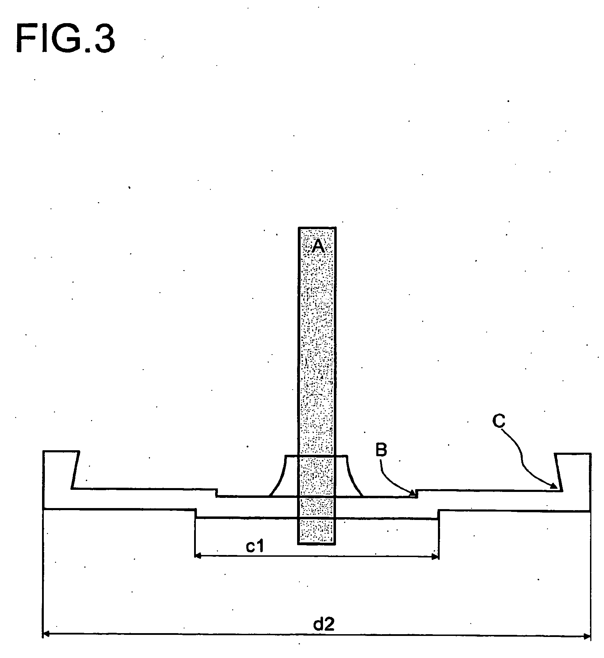

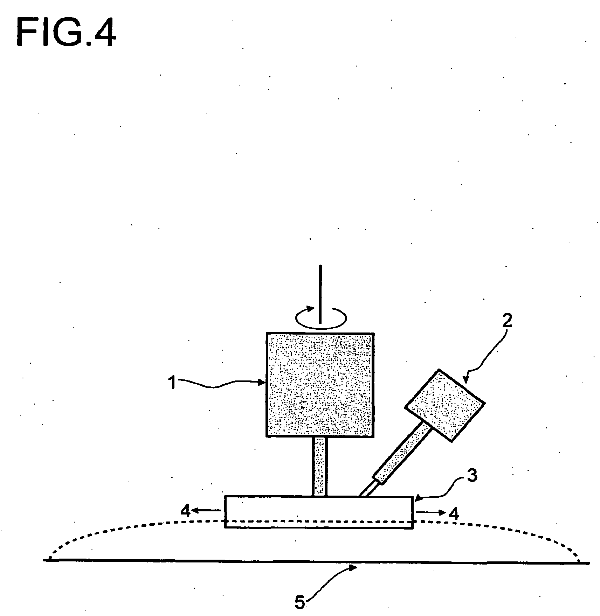

Figur 4 zeigt eine Vorrichtung zur Herstellung von Sandwichelementen unter Verwendung der erfindungsgemäßen Kaskadenscheibe. Über eine Dosiereinrichtung (2) wird der Kleber auf die Kaskadenscheibe (3) gegeben. Auf die untere Deckschicht (5) wird über die rotierende Kaskadenscheibe (3) der Kleber (4) aufgebracht und danach die Dämmmaterialplatte aufgelegt. Daran anschließend kann wiederum mit einer weiteren Kaskadenscheibe (4b) Kleber auf die Oberseite der Dämmmaterialplatte verteilt und die obere Deckschicht (4b) zugeführt werden.

Bevorzugt werden als Kleber c) solche auf Isocyanatbasis, insbesondere reaktive Ein- oder Mehrkomponenten-Polyurethansysteme, eingesetzt.

Dabei können die aus dem Stand der Technik bekannten Kleber auf Isocyanatbasis eingesetzt werden. Diese sind im allgemeinen erhältlich durch Umsetzung von Polyisocyanaten mit Verbindungen mit zwei gegenüber Isocyanaten reaktiven Wasserstoffatomen, wobei das Umsetzungsverhältnis vorzugsweise so gewählt wird, dass im Reaktionsgemisch das Verhältnis von Anzahl an Isocyanatgruppen zu Anzahl an gegenüber Isocyanaten reaktiven Gruppen 0,8 bis 1,8 : 1, bevorzugt 1 bis 1,6 : 1 beträgt.

Als Polyisocyanate kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI).

Als Verbindungen mit mindestens zwei gegenüber Isocyanat reaktiven Wasserstoffatomen kommen im allgemeinen solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. ß-Diketo-Gruppen, im Molekül tragen.

Vorzugsweise eingesetzt werden Polyetherote und/oder Polyesterole, besonders bevorzugt Polyetherpolyole. Die Hydroxylzahl der verwendeten Polyetherole und/oder Polyesterole beträgt vorzugsweise 25 bis 800 mg KOH/g, die Molekulargewichte sind im allgemeinen größer als 400. Die Polyurethane können ohne oder mit Kettenverlängerungs- und/oder Vernetzungsmitteln hergestellt werden. Als Kettenverlängerungs- und/oder
Vernetzungsmittel kommen insbesondere zwei- oder dreifunktionelle Amine und Alkohole, insbesondere Diole und/oder Triole mit Molekulargewichten kleiner als 400, vorzugsweise von 60 bis 300, zum Einsatz.
Die Polyolkomponente des Klebers c) weist dabei vorzugsweise eine Viskosität von 100 - 1000 mPas, bevorzugt 100 - 800 mPas, besonders bevorzugt 100 - 400 mPas bei 35°C auf.

Im Kleber c) können gegebenenfalls additive oder reaktive Flammschutzmittel enthalten sein. Derartige Flammschutzmittel werden im allgemeinen in einer Menge von 0,1 bis 30 Gew.-%, bezogen auf das Gesamtgewicht der Polyolkomponente, eingesetzt.

Der Umsetzung der Polyisocyanaten mit den Polyolen werden bevorzugt keine physikalischen Treibmittel zugegeben. Die verwendeten Polyole können jedoch noch Restwasser enthalten oder es können ihnen geringe Mengen an Wasser zugesetzt sein, welches als Treibmittel wirkt. Die resultierenden Polyurethankleber weisen dadurch eine Dichte von 40 bis 800 g/l, bevorzugt von 50 bis 500 g/l, besonders bevorzugt von 60 bis 200 g/l auf.

Die für das erfindungsgemäße Verfahren als Kernmaterial eingesetzten anorganischen mineralischen, thermischen Dämmmaterialplatten b) sind insbesondere Mineralwolle- oder Steinwolledämmmaterialplatten. Die anorganischen Kernmaterialien sind insbesondere dann bevorzugt, wenn eine hohe Brandsicherheit der Verbundelemente gefordert ist.

Organische thermische Dämmmaterialien sind handelsübliche Platten aus geschäumten Kunststoffen, beispielsweise geschäumten Polystyrol (EPS, XPS), geschäumtem PVC geschäumtem Polyurethan oder Melaminharzschäumen.

Die Dichte der hierfür eingesetzten Polyurethan-Kleber beträgt 40 bis 800 kg/m³, vorzugsweise 50 bis 500 kg/m³, insbesondere 60 bis 200 kg/m³.

Die Dicke der Verbundelemente liegt üblicherweise im Bereich zwischen 5 bis 250 mm.

### Beispiele

### A) Zusammensetzung des Klebersystems

### A-Komponente

| | |
|---|---|
| 20 Teile | Polyetherol 1 bestehend aus Saccharose,Pentaerytrit und Propylenoxid, Funktionalität 4, Hydroxylzahl 400 mgKOH/g |
| 25 Teile | Polyetherol 2 bestehend aus Glycerol und Propylenoxid , Funktionalität 3, Hydroxylzahl 400 mgKOH/g |
| 41 Teile | Polyetherol 3 bestehend aus Propylenglykol und Propylenoxid, Funktionalität 2, Hydroxylzahl 250 mgKOH/g |
| 10 Teile | Flammschutzmittel Trischlorisoproylphosphat, TCPP |
| 1 Teil | Wasser |
| 1 Teil | tertiäres Amin |

### B-Komponente

### Isocyanat Lupranat M20 , polymeres MDI (BASF AG)

A- und B-Komponente wurden in solchen Verhältnissen miteinander vermischt dass die Kennzahl im Bereich von 110 lag.

### B) Zusammensetzung des PUR-Systems II.

### A-Komponente

| | |
|---|---|
| 50 Teile | Polyetherol 4 bestehend aus Saccharose und Propylenoxid, Funktionalität 4,5, Hydroxylzahl 480mgKOH/g |
| 25 Teile | Polyetherol 3 bestehend aus Propylenglykol und Propylenoxid, Funktionalität 2, Hydroxylzahl 250 mgKOH/g |
| 20 Teile | Teile Flammschutzmittel 1 Trischlorisopropylphosphat, TCPP |
| 0,5 Teile | Wasser |
| 1,5 Teile | siliconhaltiger Stabilisator |
| 3 Teile | tertiäres Amin |

### B-Komponente

### Isocyanat Lupranat M50, polymeres MDI (BASF AG)

A- und B-Komponente wurden in solchen Verhältnissen zur Reaktion gebracht, dass die Kennzahl im Bereich 120 lag.

Das Klebersystem wurde bei einer Temperatur von 30-50°C mittels einer Niederdruckmischmaschine (UNIPRE) vermischt und mittels eines Rührorgans aus Kunststoff auf den rotierenden Körper aufgetragen. Das Doppelband hatte eine Breite von 1,2 m und wurde mit einer konstanten Geschwindigkeit von 6 m/min vorangetrieben. Die ausgetragenen Mengen an Kleber wurden so variiert, das Auftragsmengen von 100, 120 und 140 g/m² realisiert wurden. Die Temperatur des Doppelbandes betrug 30 bis 45 °C. Die ausgetragene Menge für das mittlere Drittel und die Austragsleistung gesamt wurden in separaten Versuchen ermittelt. Dabei wurde das Reaktionsgemisch auf eine Papierbahn mit konstantem Flächengewicht aufgetragen. Das Auftragen erfolgte, indem das aus dem Mischkopf austretende Reaktionsgemisch auf den rotierenden Körper gegeben wurde. Durch die Rotationsbewegung wurde das Reaktionsgemisch durch die Bohrungen der Kaskadenscheibe oder vom Rand der sternförmigen Scheibe weggeschleudert und traf tröpfchenförmig auf die untere Papierdeckschicht. Nach dem Aushärten wurde ein laufender Meter Papierbahn ausgewogen, gedrittelt und die Menge des mittleren Drittels ermittelt.

Die Differenz zwischen Gesamtauftrag und Auftrag im mittleren Drittel ist ein Maß für die Verteilung des Klebers über die Breite des Paneels.

Nach Aushärtung des Systems wurden Prüfkörper der Abmessung 100x100x5 mm gesägt und die Haftung des Dämmmaterials zur Deckschicht nach DIN EN ISO 527-1 / DIN 53292 bestimmt.

| | rotierender Körper unten | rotierender Körper oben | Versagen Zugfestigkeit Mittleres Drittel | Substrat | Austrag gesamt (g/m²) | Auftrag Mittleres Drittel (g/m²) |
|---|---|---|---|---|---|---|
| 1 | A | A | in Miwo | Miwo | 120 | 105 |
| 2 | A | A | in EPS | EPS | 100 | 88 |
| 3 | B | A | in Miwo | Miwo | 120 | 101 |
| 4 | C | C | in Miwo | Miwo | 140 | 126 |
| 5 | D | A | in Miwo | Miwo | 120 | 100 |
| 6 | D | D | in Miwo | Miwo | 140 | 127 |
| 7 | E | F | in Miwo | Miwo | 100 | 92 |
| 8 | F | F | in EPS | EPS | 120 | 102 |
| 9 | G | G | Kleber/Blech | Miwo | 120 | 83 |
| 10 | H | H | Kleber/Blech | Miwo | 120 | 80 |

Tabelle 1. Versuchsparameter und Ergebnisse. Beispiel 9 und 10 sind die Vergleichsbeispiele für die Herstellung von Sandwichelementen mit einer einfachen Kreisscheibe, bei der vom Rand abgeschleudert wird.

In Miwo bedeutet: Miwo haftet stärker am Blech als seine eigene Reißfestigkeit/ Querzugfestigkeit. Man erhält ein Blech, das mit herausgerupften Miwo-Fasern übersät ist. In EPS bedeutet: EPS haftet stärker am Blech als seine eigene Querzugfestigkeit. Das Blech ist mit ausgerissenen EPS-Brocken übersät.

Kleber/Blech bedeutet: zu wenig Kleber vorhanden, es bleiben blanke Stellen auf dem Blech oder die gerige Menge Kleber bleibt eher mit den Miwo-Fasern verbunden als mit dem Blech

**Tabelle 2: Verwendete Scheibengeometrien der sternscheiben**

| Scheibe Nr. | Bezeichnung | Geometri e | Außenradius (mm) | Innenradius (mm) |
|---|---|---|---|---|
| A | 4-Stern-Scheibe | flach | 10 | 6 |
| B | 4-Stern-Scheibe | flach | 7 | 4 |
| C | 5-Stern-Scheibe | flach | 12 | 4 |

**Tabelle 3. Verwendete Scheibengeometrien der Kaskaden- und Kreisscheiben**

| Scheibe Nr. | Bezeichnung | Radius | Anzahl Kaskaden | Anzahl Löcher pro Kaskade | Anstellwinkel der Bohrungen | Durchmesser der Bohrungen |
|---|---|---|---|---|---|---|
| D | 2er Kaskadenscheibe | 4 cm | 2 | 4 | 45° | 2 mm |
| E | 3er Kaskadenscheibe | 10 cm | 3 | 4 | 45° | 1,5 mm |
| F | 2er Kaskadenscheibe | 8 cm | 2 | 6 | 45° | 1,5 mm |
| G | Kreisscheibe | 4 cm | - | - | - | - |
| H | Kreisscheibe | 8 cm | - | - | - | - |

Mit diesen Scheiben können nur untere Deckschichten oder Dämmmaterialien von oben her mit Kleber benetzt werden.

## Patentansprüche

1. Verfahren zur Herstellung von Verbundelementen aus mindestens einer Deckschicht a) und thermischen Dämmmaterialplatten b), wobei zwischen der Deckschicht a) und den thermischen Dämmmaterialplatten b) ein Kleber c) aufgebracht ist, wobei die Deckschicht a) kontinuierlich bewegt wird, auf die Deckschicht a) thermische Dämmmaterialplatten b) und darauf gegebenenfalls eine weitere Deckschicht a) aufgebracht und der Kleber c) auf die thermische Dämmmaterialplatten b) oder auf die Deckschicht a) aufgebracht wird, **dadurch gekennzeichnet, dass** der Auftrag des Klebers c) mittels eines rotierenden flachen Körpers erfolgt, der in der Waagerechten oder in einer geringen Abweichung von der Waagerechten von bis zu 15°, vorzugsweise parallel zu der Deckschicht a) oder den thermischen Dämmmaterialplatten b) angebracht ist und dass die Drehzahl des rotierenden flachen Körpers zwischen 200 und 2000 min⁻¹ beträgt.

2. Verfahren nach Anspruch 1, **dadurch gekennzeichnet, dass** der rotierende flache Körper als ebener, mindestens vierzackiger Stern ausgestaltet ist.

3. Verfahren nach Anspruch 1, **dadurch gekennzeichnet, dass** der rotierende flache Körper als mit den Spitzen nach oben gebogener mindestens vierzackiger Stern ausgestaltet ist.

4. Verfahren nach Anspruch 1, **dadurch gekennzeichnet, dass** der rotierende flache Körper als ebene Scheibe mit kaskadenartig ansteigenden Umrandungen ausgestaltet ist.

5. Verfahren nach Anspruch 1, **dadurch gekennzeichnet, dass** der rotierende flache Körper bei der Ausgestaltung als Stern vier oder fünf Zacken aufweist.

6. Verfahren nach Anspruch 1, **dadurch gekennzeichnet, dass** der als ebener vier- oder fünfzackiger Stern ausgestaltete rotierende Körper keine geraden Linien und nur abgerundete Ecken aufweist.

7. Verfahren nach Anspruch 1, **dadurch gekennzeichnet, dass** der als ebener vier- oder fünfzackiger Stern ausgestaltete rotierende Körper als mit den Spitzen nach oben gebogener vier- oder fünfzackiger Stern ausgestaltet ist.

8. Verfahren nach Anspruch 1, **dadurch gekennzeichnet, dass** der als ebene Scheibe mit kaskadenartig ansteigenden Umrandungen ausgestaltete rotierende Körper Austrittsöffnungen aufweist.

9. Verfahren nach Anspruch 1, **dadurch gekennzeichnet, dass** zum Aufbringen des Klebers c) auf die untere Deckschicht a) und/oder die Oberseite des thermischen Dämmmaterials b) als rotierender Körper ein ebener vier- oder fünfzackiger Stern oder eine ebene Scheibe mit kaskadenartig ansteigenden Umrandungen eingesetzt wird.

10. Verfahren nach Anspruch 1, **dadurch gekennzeichnet, dass** zum Aufbringen des Klebers c) auf die obere Deckschicht a) als rotierender Körper ein mit den Spitzen nach oben gebogener vier- oder fünfzackiger Stern oder eine ebene Scheibe mit kaskadenartig ansteigenden Umrandungen eingesetzt wird.

11. Verfahren nach Anspruch 1, **dadurch gekennzeichnet, dass** als thermische Dämmmaterialplatten b) Mineralwolle- oder Steinwolledämmmaterialien, geschäumtes Polystyrol, geschäumtes PVC, geschäumtes Polyurethan oder Melaminharzschäume eingesetzt werden.

12. Verfahren nach Anspruch 1, **dadurch gekennzeichnet, dass** als Kleber c) ein Kleber auf Isocyanatbasis eingesetzt wird.

13. Verfahren nach Anspruch 1, **dadurch gekennzeichnet, dass** als Deckschichten a) Gipskartonplatten, Glasfliese, Aluminiumfolien, Aluminium- Kupfer- oder Stahlbleche eingesetzt werden.

## Claims

1. A method for the production of composite elements composed of at least one outer layer a) and panels of thermal insulation material b), where between the outer layer a) and the panels of thermal insulation material b) an adhesive c) has been applied, the outer layer a) being moved continuously, the panels of thermal insulation material b) being applied to the outer layer a) and optionally a further outer layer a) being applied to the panels of thermal insulation material b), and the adhesive c) being applied to the panels of thermal insulation material b) or to the outer layer a), which comprises applying the adhesive c) by means of a rotating flat body which is mounted horizontally or with a slight deviation from the horizontal, of up to 15°, preferably parallel to the outer layer a) or to the panels of thermal insulation material b), the rotary speed of the rotating flat body being between 200 and 2000 min⁻¹_{.}

2. The method according to claim 1, wherein the rotating flat body is designed as an at least four-pointed planar star.

3. The method according to claim 1, wherein the rotating flat body is designed as an at least four-pointed star with the points curved upward.

4. The method according to claim 1, wherein the rotating flat body is designed as a planar disk having borders ascending in a cascade-like manner.

5. The method according to claim 1, wherein the rotating flat body in the star design has four or five points.

6. The method according to claim 1, wherein the rotating body designed as a four- or five-pointed planar star has no straight lines and only rounded corners.

7. The method according to claim 1, wherein the rotating body designed as a four- or five-pointed planar star is designed as a four- or five-pointed star with the points curved upward.

8. The method according to claim 1, wherein the rotating body designed as a planar disk having borders ascending in a cascade-like manner has outlet orifices.

9. The method according to claim 1, wherein a four- or five-pointed planar star or a planar disk having borders ascending in a cascade-like manner is used as a rotating body for applying the adhesive c) to the lower outer layer a) and/or the top face of the thermal insulation material b).

10. The method according to claim 1, wherein a four- or five-pointed star with the points curved upward or a planar disk having borders ascending in a cascade-like manner is used as a rotating body for applying the adhesive c) to the upper outer layer a).

11. The method according to claim 1, wherein mineral-wool or rock-wool insulating materials, foamed polystyrene, foamed PVC, foamed polyurethane or melamine resin foams are used as panels of thermal insulation material b).

12. The method according to claim 1, wherein an isocyanate-based adhesive is used as adhesive c).

13. The method according to claim 1, wherein plasterboard panels, glass tile, aluminum foils or aluminum, copper or steel sheets are used as outer layers (a).

## Revendications

1. Procédé pour la fabrication d'éléments composites constitués par au moins une couche de dessus a) et des plaques en matériau d'isolation thermique b), un adhésif c) étant appliqué entre la couche de dessus a) et les plaques en matériau d'isolation thermique b), la couche de dessus a) étant continuellement en mouvement, des plaques en matériau d'isolation thermique b) étant appliquées sur la couche de dessus a) et une autre couche de dessus a) étant le cas échéant appliquée sur lesdites plaques en matériau d'isolation thermique et l'adhésif c) étant appliqué sur les plaques en matériau d'isolation thermique b) ou sur la couche de dessus a), **caractérisé en ce que** l'application de l'adhésif c) est réalisée au moyen d'un corps plat en rotation qui est disposé dans une position horizontale ou une position légèrement déviée de l'horizontale de jusqu'à 15°, de préférence parallèlement à la couche de dessus a) ou aux plaques en matériau d'isolation thermique b), et en le que la vitesse de rotation du corps plat eu rotation en comprise entre 200 et 2000 win⁻¹.

2. Procédé selon la revendication 1, **caractérisé en ce que** le corps plat en rotation est réalisé sous forme d'une étoile plate, au moins à quatre pointes.

3. Procédé selon la revendication 1, **caractérisé en ce que** le corps plat en rotation est réalisé sous forme d'une étoile au moins à quatre pointes avec les pointes courbées vers le haut.

4. Procédé selon la revendication 1, **caractérisé en ce que** le corps plat en rotation est réalisé sous forme d'un disque plat avec des pourtours croissants en cascade.

5. Procédé selon la revendication 1, **caractérisé en ce que** le corps plat en rotation, en cas de réalisation en étoile, présente quatre ou cinq pointes.

6. Procédé selon la revendication 1, **caractérisé en ce que** le corps en rotation réalisé sous forme d'étoile plate à quatre ou cinq pointes ne présente pas de lignes droites et uniquement des angles arrondis.

7. Procédé selon la revendication 1, **caractérisé en ce que** le corps en rotation réalisé sous forme d'étoile plate à quatre ou cinq pointes est réalisé sous forme d'étoile à quatre ou cinq pointes, les pointes étant courbées vers le haut.

8. Procédé selon la revendication 1, **caractérisé en ce que** le corps en rotation réalisé sous forme de disque plat avec des pourtours croissants en cascade présente des ouvertures d'évacuation.

9. Procédé selon la revendication 1, **caractérisé en ce que**, pour l'application de l'adhésif c) sur la couche de dessus a) inférieure et/ou sur la face supérieure du matériau d'isolation thermique b), on utilise comme corps en rotation une étoile plate à quatre ou cinq pointes ou un disque plat avec des pourtours croissants en cascade.

10. Procédé selon la revendication 1, **caractérisé en ce que**, pour l'application de l'adhésif c) sur la couche de dessus a) supérieure, on utilise comme corps en rotation une étoile à quatre ou cinq pointes, les pointes étant courbées vers le haut ou un disque plat avec des pourtours croissants en cascade.

11. Procédé selon la revendication 1, **caractérisé en ce qu'**on utilise, comme plaques en matériau d'isolation thermique b), des matériaux d'isolation en laine minérale ou de roche, du polystyrène moussé, du PVC moussé, du polyuréthane moussé ou des mousses de résine de mélamine.

12. Procédé selon la revendication 1, **caractérisé en ce qu'**on utilise comme adhésif c) un adhésif à base d'isocyanate.

13. Procédé selon la revendication 1, **caractérisé en ce qu'**on utilise comme couches de dessus a) des plaques de carton-plâtre, un carreau de verre, des feuilles d'aluminium, des tôles d'aluminium, de cuivre ou d'acier.
